# EUROPÄISCHE PATENTSCHRIFT

(11) **EP 1 563 174 B1**
(45) Veröffentlichungstag und Bekanntmachung des Hinweises auf die Patenterteilung: **25.03.2009**
(21) Anmeldenummer: 03773469.6
(22) Anmeldetag: 30.09.2003
(51) Int. Cl.: F02D 9/10

(54) **VERFAHREN ZUR HERSTELLUNG EINES DROSSELKLAPPENSTUTZENS**
METHOD FOR THE PRODUCTION OF A THROTTLE VALVE PORT
PROCEDE POUR PRODUIRE UN BOITIER DE PAPILLON

(30) Priorität: 22.11.2002 DE 10254616
(43) Veröffentlichungstag der Anmeldung: 17.08.2005
(73) Patentinhaber: Continental Automotive GmbH, 30165 Hannover (DE)
(72) Erfinder: HANNEWALD, Thomas, 64347 Griesheim (DE)
(86) Internationale Anmeldenummer: PCT/DE2003/003263
(87) Internationale Veröffentlichungsnummer: WO 2004/048760

(56) Entgegenhaltungen:
- EP-A- 0 947 681
- EP-A- 0 964 137
- US-A- 5 188 078
- US-A1- 2002 104 510

## Beschreibung

Die Erfindung bezieht sich auf ein Verfahren zur Herstellung eines Drosselklappenstutzens nach dem Oberbegriff des Anspruches 1.

Drosselklappenstutzen sind bekannt. Dabei handelt es sich um meist einteilige Gehäuse, die einen Luftkanal aufweisen, in dem eine Drosselklappe an einer Drosselklappenwelle angeordnet und die Drosselklappenwelle drehbar gelagert ist. Der Drosselklappenstutzen enthält Getriebeteile und Antriebsaggregate, die für die Betätigung der Drosselklappe erforderlich sind. In der DE 40 27 269 A1 wird ein Drosselklappenstutzen mit einer von einem Elektromotor und mechanisch mittels eines Stellhebels betätigbarer Drosselklappenwelle beschrieben. Bei dem Elektromotor handelt es sich um einen, ohne Zwischenschaltung einer Kupplung auf der Drosselklappenwelle, angeordneten Schrittmotor. Der Stellhebel ist dabei mittels einer Koppelfeder mit der Drosselklappenwelle verbunden. In der DE 198 25 727 A1 wird ein Drosselklappenstutzen beschrieben, der eine in einem Drosselklappengehäuse drehbar gelagerte und von einem Stellantrieb über Übertragungselemente verstellbare Drosselklappe aufweist. Die Übertragungselemente sind auf oder an einem Elemententräger angeordnet, wobei der Elemententräger an dem Drosselklappengehäuse befestigt ist. Bei der Herstellung solcher Drosselklappenstutzen ist es in der Regel nachteilig, dass die im einteiligen Drosselklappengehäuse zu integrierenden Innenteile, wie beispielsweise Elektromotor, Federn, Zahnradsegmente sowie Drosselklappe und Drosselklappenwelle einseitig in einer Montagerichtung in das Gehäuse des Drosselklappenstutzens eingeführt und anschließend montiert werden müssen. Diese Fertigungsweise ist relativ aufwendig, da enge Toleranzen eingehalten werden müssen. Eine hoch automatisierte Montage von Drosselklappenstutzen ist daher sehr aufwendig und mit erheblichen Investitionen verbunden.

Aus der EP 0 947 681 A2 und der US 2002/0104510 A1 sind Verfahren zur Herstellung eines Drosselklappenstutzens bekannt, bei welchem in einem ersten Schritt eine erste Gehäusehälfte und eine zweite Gehäusehälfte mit entsprechenden Aussparungen für Innenteile durch einen Gießprozess hergestellt werden, anschließend in einem zweiten Schritt die Innenteile in der ersten Gehäusehälfte oder in der zweiten Gehäusehälfte positioniert werden und anschließend die erste Gehäusehälfte und die zweite Gehäusehälfte in einem dritten Schritt miteinander verbunden werden. Die erste Gehäusehälfte und die zweite Gehäusehälfte werden waagerecht miteinander verbunden, weisen also eine Verbindung auf, die senkrecht zur Längsrichtung des Luftkanals verläuft. Sie werden beispielsweise durch Metall oder Kunststoff gefertigt, wobei beispielsweise als Gießprozess das Spritzgießen gewählt wird. Unter den Innenteilen sind alle diejenigen technischen Bauteile zu verstehen, die im Drosselklappenstutzen angeordnet werden. Dabei handelt es sich beispielsweise um Drosselklappe, Drosselklappenwelle, Motor, Federn, Stanzgitter, Zahnradsegmente, elektrische Bauteile und Stecker. Diese Innenteile werden in der ersten Gehäusehälfte oder in der zweiten Gehäusehälfte positioniert, was beispielsweise durch Einlegen oder Einklemmen erfolgen kann. Das Verbinden der ersten Gehäusehälfte mit der zweiten Gehäusehälfte kann beispielsweise durch Verschrauben oder Verkleben erfolgen. Dadurch erfolgt gleichzeitig eine Fixierung der Innenteile. Es hat sich in überraschender Weise gezeigt, dass der Drosselklappenstutzen auf diese Weise relativ schnell und einfach hergestellt werden kann, wobei auf eine relativ aufwendige und umständliche Montage durch relativ unzugängliche Öffnungen verzichtet wird. Das Verfahren ist sehr gut für eine Montage von Hand oder eine automatische Fertigung geeignet.

Die EP 0 947 681 A2 beschreibt einen Drosselklappenstutzen mit zwei Gehäusehälften aus Kunststoff, während der Drosselklappenstutzen gemäß der US 2002/104510 A1 vollständig aus Metall besteht.

Die Aufgabe der vorliegenden Erfindung besteht darin, Nachteile vollständig aus einem Material gefertigter Drosselklappenstutzen zu vermeiden.

Erfindungsgemäß werden die erste Gehäusehälfte oder die zweite Gehäusehälfte im ersten Schritt aus Kunststoff und die jeweils andere Gehäusehälfte aus Aluminium hergestellt. Dabei ist vorteilhaft, dass die Innenteile relativ einfach und problemlos in die Gehäusehälfte aus Kunststoff eingeklemmt werden können und die jeweils andere Gehäusehälfte aus Aluminium als Deckel aufgesetzt werden kann. Als Kunststoffe kommen Duroplaste oder Thermoplaste zum Einsatz, die eine entsprechende Temperaturbeständigkeit aufweisen.

Eine bevorzugte Ausgestaltung der Erfindung besteht darin, dass die Innenteile im zweiten Schritt nur in der ersten Gehäusehälfte oder nur in der zweiten Gehäusehälfte positioniert werden. Dadurch wird eine automatisierte Herstellung vereinfacht, da eine Gehäusehälfte, die keine Innenteile aufweist, als Deckel einfach auf die komplementäre Gehäusehälfte aufgesetzt werden kann.

Gemäß einer weiteren bevorzugten Ausgestaltung der Erfindung werden die Innenteile vor dem zweiten Schritt zumindest teilweise zu Teileinheiten kombiniert. So ist es beispielsweise vorteilhaft möglich, den Motor aus Einzelteilen zu fertigen und eine Motoreinheit vorab herzustellen, die Kalotten-Gleitlager aufweist. Der Einsatz von Kalotten-Gleitlager ist deshalb relativ einfach und vorteilhaft durchzuführen, da die entsprechenden Aussparungen vorab im Gießprozess bei der Herstellung der ersten Gehäusehälfte und der zweiten Gehäusehälfte problemlos angeordnet werden können.

Eine weitere Ausgestaltung der Erfindung besteht darin, dass eine Teileinheit aus der Drosselklappe und der Drosselklappenwelle kombiniert wird. Dabei ist vorteilhaft, dass die Verbindung zwischen der Drosselklappe und der Drosselklappenwelle bereits vor der Positionierung in der ersten Gehäusehälfte oder in der zweiten Gehäusehälfte vorgenommen werden kann, was nach den bekannten Verfahren wegen der erforderlichen Einhaltung von Toleranzen so nicht möglich ist.

Gemäß einer weiteren bevorzugten Ausgestaltung der Erfindung ist vorgesehen, dass im dritten Schritt eine Dichtung zwischen der ersten Gehäusehälfte und der zweiten Gehäusehälfte angeordnet wird. Als Dichtungsmaterialien kommen dabei beispielsweise Kunststoffe zum Einsatz, die temperaturbeständig bis ca. 150 °C sind.

Nach einer weiteren bevorzugten Ausgestaltung der Erfindung wird die zweite Gehäusehälfte im dritten Schritt im Bereich des Luftkanals mit einem umlaufenden Bund in die erste Gehäusehälfte eingreifend positioniert. Der Luftkanal ist in der Regel kreisrund ausgebildet. Bei dem umlaufenden Bund handelt es sich um einen Vorsprung, der in die erste Gehäusehälfte im dritten Schritt eingreift. Dadurch lassen sich die erste Gehäusehälfte und die zweite Gehäusehälfte zueinander auf relativ einfache, vorteilhafte Weise fixieren, wodurch die Anordnung der Innenteile im Drosselklappenstutzen erleichtert wird.

Gemäß einer weiteren bevorzugten Ausgestaltung der Erfindung werden im ersten Schritt die erste Gehäusehälfte mit einer größeren ersten Aussparung und die zweite Gehäusehälfte mit einer kleineren zweiten Aussparung durch einen Gießprozess hergestellt, wobei die erste Aussparung und die zweite Aussparung zusammen den Luftkanal bilden, und im dritten Schritt zwischen der ersten Gehäusehälfte und der zweiten Gehäusehälfte ein Einsatz mit Innenkonus angeordnet, dessen Innenkonus den kontinuierlichen Übergang von der größeren ersten Aussparung zur kleineren zweiten Aussparung bildet. Durch die Anordnung des Einsatzes mit dem Innenkonus ist es besonders vorteilhaft möglich, den Querschnitt des Luftkanals je nach Bedarf zu verkleinern. Dazu ist es lediglich erforderlich, die zweite Gehäusehälfte entsprechend auszutauschen und den Einsatz mit Innenkonus anzuordnen. Dabei ist besonders vorteilhaft, dass bereits vorhandene Drosselklappenstutzen entsprechend nachgerüstet werden können.

Die Erfindung wird nachfolgend anhand der Zeichnung (Fig. 1 bis Fig. 4) näher und beispielhaft erläutert.
- Fig. 1: zeigt die erste Gehäusehälfte und die zweite Gehäusehälfte des Drosselklappenstutzens mit Innenteilen.
- Fig. 2: zeigt eine aus Innenteilen kombinierte Teileinheit.
- Fig. 3: zeigt die Anordnung der ersten Gehäusehälfte und der zweiten Gehäusehälfte im Bereich des Luftkanals im Querschnitt.
- Fig. 4: zeigt eine alternative Ausgestaltung der ersten Gehäusehälfte und der zweiten Gehäusehälfte im Bereich des Luftkanals im Querschnitt.

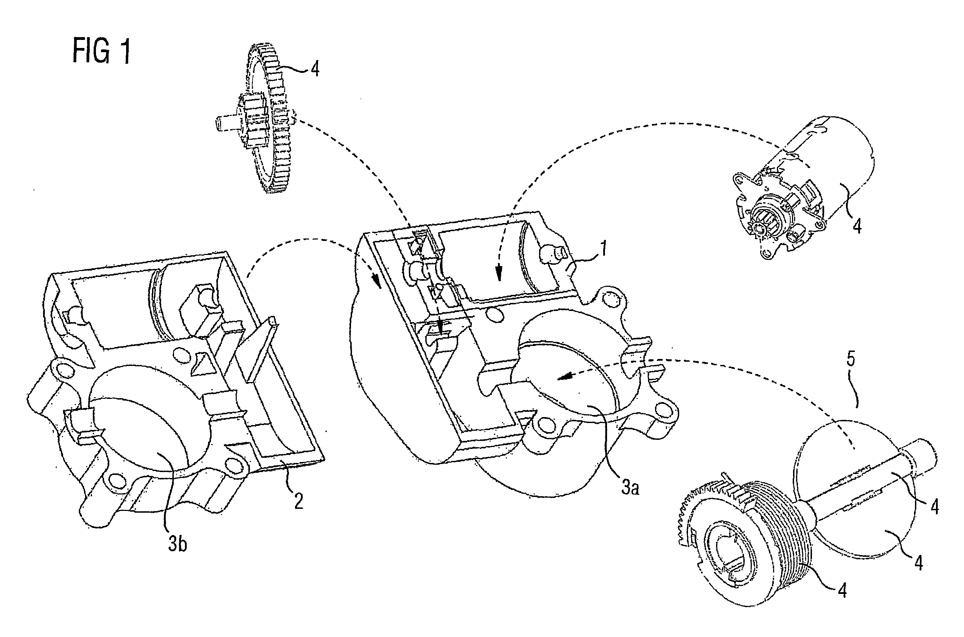

In Fig. 1 ist die erste Gehäusehälfte 1 und die zweite Gehäusehälfte 2 des Drosselklappenstutzens dargestellt. Bei dem Verfahren zur Herstellung des Drosselklappenstutzens werden die erste Gehäusehälfte 1 und die zweite Gehäusehälfte 2 in einem ersten Schritt mit den entsprechenden Aussparungen für Innenteile 4 durch einen Gießprozess hergestellt. In einem zweiten Schritt werden die Innenteile 4 in der ersten Gehäusehälfte 1 positioniert. Dies erfolgt in Pfeilrichtung. Dabei ist es in der Regel vorteilhaft, einige Innenteile 4 vor dem zweiten Schritt zumindest teilweise zu einer Teileinheit 5 zu kombinieren. Die erste Gehäusehälfte 1 weist eine erste Aussparung 3a und die zweite Gehäusehälfte 2 eine zweite Aussparung 3b auf, die den Luftkanal bilden. Die erste Gehäusehälfte 1 und die zweite Gehäusehälfte 2 werden in einem dritten Schritt des Verfahrens zur Herstellung des Drosselklappenstutzens miteinander verbunden. Dies kann beispielsweise durch Verschrauben oder Verkleben erfolgen.

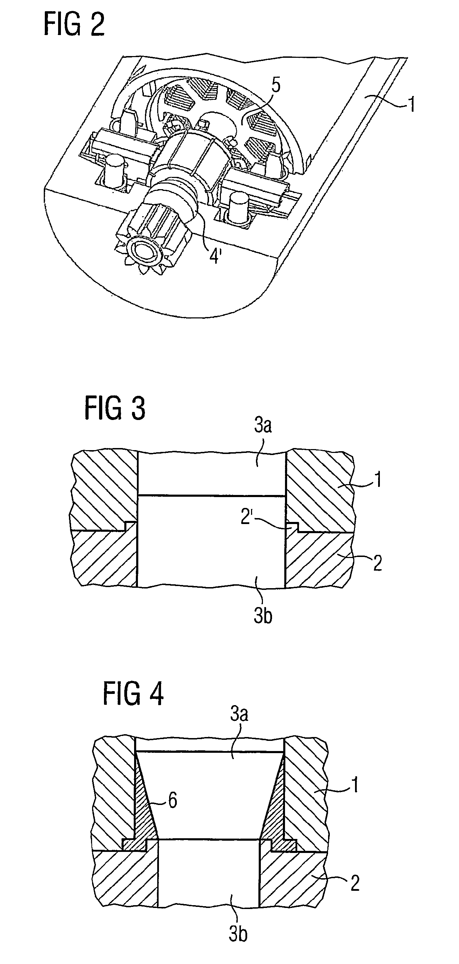

In Fig. 2 ist eine Teileinheit 5 dreidimensional dargestellt, die aus mehreren Innenteilen besteht. Es handelt sich dabei um den Elektromotor, der in der ersten Gehäusehälfte 1 angeordnet ist. Die Zusammenfassung von Innenteilen zu jeweils einer Teileinheit 5 ermöglicht die vorteilhafte Anordnung von Kalotten-Gleitlager 4', die auf relativ einfache Weise in die Aussparungen der ersten Gehäusehälfte 1 oder der zweiten Gehäusehälfte (nicht dargestellt) eingesetzt werden können.

In Fig. 3 ist die erste Gehäusehälfte 1 und die zweite Gehäusehälfte 2 im Bereich des Luftkanals mit der ersten Aussparung 3a und der zweiten Aussparung 3b im Querschnitt dargestellt. Die zweite Gehäusehälfte 2 weist dabei einen umlaufenden Bund 2' auf. Im dritten Schritt des Verfahrens zur Herstellung des Drosselklappenstutzens wird die zweite Gehäusehälfte 2 im Bereich des Luftkanals mit dem umlaufenden Bund 2' in die erste Gehäusehälfte 1 eingreifend positioniert. Dies verbessert die Verbindung zwischen der ersten Gehäusehälfte 1 und der zweiten Gehäusehälfte 2 und verbessert gleichzeitig die Fixierung der Innenteile (nicht dargestellt).

In Fig. 4 ist eine alternative Anordnung der ersten Gehäusehälfte 1 und der zweiten Gehäusehälfte 2 im Bereich des Luftkanals im Querschnitt dargestellt. Im ersten Schritt des Verfahrens zur Herstellung des Drosselklappenstutzens werden die erste Gehäusehälfte 1 mit einer größeren ersten Aussparung 3a und die zweite Gehäusehälfte 2 mit einer kleineren zweiten Aussparung 3b durch einen Gießprozess hergestellt. Die erste Aussparung 3a und die zweite Aussparung 3b bilden zusammen den Luftkanal. Im dritten Schritt des Verfahren wird zwischen der ersten Gehäusehälfte 1 und der zweiten Gehäusehälfte 2 ein Einsatz 6 mit Innenkonus angeordnet, dessen Innenkonus den kontinuierlichen Übergang von der größeren ersten Aussparung 3a zur kleineren zweiten Aussparung 3b bildet. Dabei ist vorteilhaft, dass der Durchmesser des Luftkanals auch nachträglich noch durch die Anordnung einer anderen zweiten Gehäusehälfte 2 und dem Einsatz 6 nachträglich verkleinert werden kann, was in einigen Fällen erwünscht ist.

## Patentansprüche

1. Verfahren zur Herstellung eines Drosselklappenstutzens, bei dem in einem ersten Schritt eine erste Gehäusehälfte (1) und eine zweite Gehäusehälfte (2) mit entsprechenden Aussparungen für Innenteile (4) durch einen Gießprozess hergestellt werden, anschließend in einem zweiten Schritt die Innenteile (4) in der ersten Gehäusehälfte (1) oder in der zweiten Gehäusehälfte (2) positioniert werden und anschließend die erste Gehäusehälfte (1) und die zweite Gehäusehälfte (2) in einem dritten Schritt miteinander verbunden werden, **dadurch gekennzeichnet, dass** die erste Gehäusehälfte (1) oder die zweite Gehäusehälfte (2) im ersten Schritt aus Kunststoff und die jeweils andere Gehäusehälfte (1, 2) aus Aluminium hergestellt werden

2. Verfahren nach Anspruch 1, bei dem die Innenteile (4) im zweiten Schritt nur in der ersten Gehäusehälfte (1) oder nur in der zweiten Gehäusehälfte (2) positioniert werden.

3. Verfahren nach Anspruch 1 oder Anspruch 2, bei dem die Innenteile (4) vor dem zweiten Schritt zumindest teilweise zu Teileinheiten (5) kombiniert werden.

4. Verfahren nach Anspruch 3, bei dem eine Teileinheit (5) aus der Drosselklappe und der Drosselklappenwelle kombiniert wird.

5. Verfahren nach einem der Ansprüche 1 bis 4, bei dem im dritten Schritt eine Dichtung zwischen der ersten Gehäusehälfte (1) und der zweiten Gehäusehälfte (2) angeordnet wird.

6. Verfahren nach einem der Ansprüche 1 bis 5, bei dem die zweite Gehäusehälfte (2) im dritten Schritt im Bereich des Luftkanals mit einem umlaufenden Bund (2') in die erste Gehäusehälfte (1) eingreifend positioniert wird.

7. Verfahren nach einem der Ansprüche 1 bis 6, bei dem im ersten Schritt die erste Gehäusehälfte (1) mit einer größeren ersten Aussparung (3a) und die zweite Gehäusehälfte (2) mit einer kleineren zweiten Aussparung (3b) durch einen Gießprozess hergestellt werden, wobei die erste Aussparung (3a) und die zweite Aussparung (3b) zusammen den Luftkanal bilden, und bei dem im dritten Schritt zwischen der ersten Gehäusehälfte (1) und der zweiten Gehäusehälfte (2) ein Einsatz (6) mit Innenkonus angeordnet wird, dessen Innenkonus den kontinuierlichen Übergang von der größeren ersten Aussparung (3a) zur kleineren zweiten Aussparung (3b) bildet.

## Claims

1. Method for the production of a throttle valve port, in which, in a first step, a first housing half (1) and a second housing half (2) are produced with corresponding recesses for inner parts (4) by means of a casting process, then, in a second step, the inner parts (4) are positioned in the first housing half (1) or in the second housing half (2) and then the first housing half (1) and the second housing half (2) are connected to each other in a third step, **characterized in that,** in the first step, the first housing half (1) or the second housing half (2) are produced from plastic and the respectively other housing half (1, 2) is produced from aluminum.

2. Method according to Claim 1, in which, in the second step, the inner parts (4) are positioned only in the first housing half (1) or only in the second housing half (2).

3. Method according to Claim 1 or Claim 2, in which at least some of the inner parts (4) are combined to form subunits (5) before the second step.

4. Method according to Claim 3, in which a subunit (5) is a combination of the throttle valve and the throttle valve shaft.

5. Method according to one of Claims 1 to 4, in which, in the third step, a seal is arranged between the first housing half (1) and the second housing half (2).

6. Method according to one of Claims 1 to 5, in which, in the third step, the second housing half (2) is positioned in the region of the air duct with an encircling collar (2') engaging in the first housing half (1).

7. Method according to one of Claims 1 to 6, in which, in the first step, the first housing half (1) is produced with a relatively large first recess (3a) and the second housing half (2) is produced with a relatively small second recess (3b) by means of a casting process, the first recess (3a) and the second recess (3b) together forming the air duct, and in which, in the third step, an insert (6) with an internal taper is arranged between the first housing half (1) and the second housing half (2), the internal taper of which insert forms the continuous transition from the relatively large first recess (3a) to the relatively small second recess (3b).

## Revendications

1. Procédé permettant de fabriquer une tubulure à papillon de régulation des gaz, au cours duquel, pendant une première phase de fabrication, on fabrique, grâce à un processus de moulage, une première moitié (1) du boîtier et une deuxième moitié (2) du boîtier avec des évidements adéquats pour des pièces internes (4), ensuite, pendant une deuxième phase de fabrication, on positionne les pièces intérieures (4) dans la première moitié (1) du boîtier ou dans la deuxième moitié (2) du boîtier et, enfin, pendant une troisième phase de fabrication, on assemble l'une à l'autre la première moitié (1) du boîtier et la deuxième moitié (2) du boîtier, **caractérisé par le fait que** la première moitié (1) du boîtier ou la deuxième moitié (2) du boîtier est fabriquée, pendant la première phase de fabrication, en matière plastique et, respectivement, l'autre moitié (1, 2) du boîtier est fabriquée en aluminium.

2. Procédé selon la revendication 1, au cours duquel les pièces intérieures (4) sont, pendant la deuxième phase de fabrication, positionnées seulement dans la première moitié (1) du boîtier ou seulement dans la deuxième moitié (2) du boîtier.

3. Procédé selon la revendication 1 ou la revendication 2, au cours duquel les pièces intérieures (4) sont, avant la deuxième phase de fabrication, au moins partiellement, combinées entre elles pour former des unités partielles (5).

4. Procédé selon la revendication 3, au cours duquel une unité partielle (5) est assemblée à partir du clapet de régulation des gaz et de l'arbre du clapet de régulation des gaz.

5. Procédé selon l'une des revendications 1 à 4, au cours duquel, pendant la troisième phase de fabrication, un joint est placé entre la première moitié (1) du boîtier et la deuxième moitié (2) du boîtier.

6. Procédé selon l'une des revendications 1 à 5, au cours duquel la deuxième moitié (2) du boîtier, pendant la troisième phase de fabrication, est positionnée, dans la zone du canal des gaz, par un épaulement périphérique (2'), dans la première moitié (1) du boîtier, en l'insérant dans la première moitié (1) du boîtier.

7. Procédé selon l'une des revendications 1 à 6, au cours duquel, pendant la première phase de fabrication, la première moitié (1) du boîtier est fabriquée, grâce à un processus de moulage, avec un premier évidement (3a) plus important et la deuxième moitié (2) du boîtier est fabriquée avec un deuxième évidement (3b) moins important, le premier évidement (3a) et le deuxième évidement (3b) formant ensemble le canal des gaz, et au cours duquel, pendant la troisième phase de fabrication, une pièce rapportée (6) comportant un cône intérieur est disposée entre la première moitié (1) du boîtier et la deuxième moitié (2) du boîtier, où le cône intérieur de la pièce rapportée formant un passage continu entre le premier évidement (3a) plus important et le deuxième évidement (3b) moins important.
